# EUROPÄISCHE PATENTSCHRIFT

(11) **EP 1 967 301 B1**
(45) Veröffentlichungstag und Bekanntmachung des Hinweises auf die Patenterteilung: **28.04.2010**
(21) Anmeldenummer: 07004569.5
(22) Anmeldetag: 06.03.2007
(51) Int. Cl.: B21D 28/04, B21D 43/10, B23Q 7/04, B25B 11/00, B25J 15/06, B65G 47/91

(54) **Maschinelle Anordnung zum Bearbeiten von plattenartigen Werkstücken mit einer Bearbeitungseinrichtung sowie mit einer Handlingvorrichtung für Bearbeitungsprodukte**
Machine assembly for processing plate-shaped workpieces with a processing unit and a handling device for processed products
Agencement mécanique destiné au traitement de pièces à usiner de type plaques à l'aide d'un dispositif de traitement tout comme avec un dispositif de manipulation pour produits de traitement

(43) Veröffentlichungstag der Anmeldung: 10.09.2008
(73) Patentinhaber: Trumpf Sachsen GmbH, 01904 Neukirch (DE)
(72) Erfinder: Poike, Thomas, 01904 Neukirch (DE); Nemuth, Jens, 02681 Wilthen (DE)
(74) Vertreter: Kohler Schmid Möbus

(56) Entgegenhaltungen:
- EP-A- 1 264 788
- EP-A2- 0 995 542

## Beschreibung

Die Erfindung betrifft eine maschinelle Anordnung zum Bearbeiten von plattenartigen Werkstücken, insbesondere von Blechen, mit einer Bearbeitungseinrichtung sowie mit einer Handlingvorrichtung, mittels derer Bearbeitungsprodukte, welche an der Bearbeitungseinrichtung unter Bearbeitung von Werkstücken hergestellt worden sind, von der Bearbeitungseinrichtung abführbar sind und welche eine Tragstruktur mit einer Halteeinrichtung für Bearbeitungsprodukte aufweist,
- wobei die Tragstruktur der Handlingvorrichtung eine Basis-Tragstruktur sowie eine sekundäre Tragstruktur aufweist, welche an der Basis-Tragstruktur relativ zu dieser beweglich gelagert ist,
- wobei die Halteeinrichtung für Bearbeitungsprodukte an der sekundären Tragstruktur vorgesehen und an wenigstens einem von der Bearbeitungseinrichtung abzuführenden Bearbeitungsprodukt festlegbar ist, indem die Halteeinrichtung unter Bewegung der sekundären Tragstruktur relativ zu der Basis-Tragstruktur gegenüber der Bearbeitungseinrichtung zustellbar ist und
- wobei die Halteeinrichtung mit dem oder den daran festgelegten Bearbeitungsprodukten in einer Abförderrichtung bewegbar ist.

EP 0 995 542 A2 offenbart eine Anlage für die Laserbearbeitung von plattenartigen Werkstücken. Eine Handlingvorrichtung ("carrier robot") der vorbekannten Anlage dient zum Beschicken von Laserbearbeitungseinrichtungen mit zu bearbeitenden Werkstücken sowie zum Abführen von an den Laserbearbeitungseinrichtungen hergestellten Bearbeitungsprodukten. Zu diesem Zweck ist die Handlingvorrichtung an einer längs der Laserbearbeitungseinrichtungen verfahrbaren Tragstruktur gelagert und mit Vakuumsaugern sowie mit einer gabelartigen Halteeinrichtung versehen. An den Vakuumsaugern sind die zu bearbeitenden Werkstücke auf ihrem Weg von einem Werkstücklager zu den Laserbearbeitungseinrichtungen fixiert. Mittels der gabelartigen Halteeinrichtung werden die Bearbeitungsprodukte aufgenommen. Außerdem lagert die gabelartige Halteeinrichtung die Bearbeitungsprodukte während ihres Abtransports. Damit die Bearbeitungsprodukte durch die gabelartige Halteeinrichtung aufgenommen werden können, sind sie nach ihrer Herstellung zunächst in eine Entladeposition zu überführen, die von der betreffenden, eine Störkontur für die Handlingvorrichtung bildenden Laserbearbeitungseinrichtung verhältnismäßig weit beabstandet ist.

Gattungsgemäßer Stand der Technik ist bekannt aus EP 1 264 788 A1. Diese Druckschrift offenbart eine Transfereinheit für Platten. Teil der Transfereinheit ist eine Aufnahme- und Transportvorrichtung. Diese umfasst einen in einer Transportrichtung beweglich geführten Schlitten. Der Schlitten weist einen U-förmigen Grundrahmen auf, an welchem drei in Transportrichtung hintereinander angeordnete Haltebalken aufgehängt sind. Jeder der Haltebalken ist über ein Paar von Hubzylindern an der Unterseite des U-förmigen Grundrahmens gelagert. Mittels der Hubzylinder können die Haltebalken in vertikaler Richtung zugestellt werden. Zusätzlich sind die Hubzylinderpaare zweier Haltebalken an dem U-förmigen Grundrahmen in Transportrichtung beweglich. Das Hubzylinderpaar des dritten Haltebalkens ist mit dem U-förmigen Grundrahmen fest verbunden. An der Unterseite der Haltebalken vorgesehene Sauger dienen zum Ansaugen der aufzunehmenden und zu transportierenden Platten.

Aufgabe der vorliegenden Erfindung ist es, eine beschleunigte Abfuhr von Bearbeitungsprodukten und damit eine Beschleunigung des gesamten Fertigungsprozesses zu ermöglichen.

Erfindungsgemäß gelöst wird diese Aufgabe durch die maschinelle Anordnung gemäß Patentanspruch 1. Eine Basis-Tragstruktur lagert eine sekundäre Tragstruktur. Die sekundäre Tragstruktur ist relativ zu der Basis-Tragstruktur beweglich und weist eine Halteeinrichtung für Bearbeitungsprodukte auf. Zur Aufnahme von abzuführenden Bearbeitungsprodukten ist die Halteeinrichtung gegenüber der Bearbeitungseinrichtung zustellbar. Zur Realisierung dieser Zustellung wird die Beweglichkeit der sekundären Tragstruktur gegenüber der Basis-Tragstruktur genutzt. Das Bauvolumen der Halteeinrichtung macht lediglich einen Teil des Bauvolumens der gesamten Handlingvorrichtung aus. Infolgedessen lässt sich die Halteeinrichtung wesentlich näher an die Bearbeitungseinrichtung heranbewegen als dies aufgrund der räumlichen Enge im Nahbereich der Bearbeitungseinrichtung für die Handlingvorrichtung insgesamt möglich wäre. Die Beweglichkeit bzw. Zustellbarkeit der mit der Halteeinrichtung versehenen sekundären Tragstruktur gegenüber der Basis-Tragstruktur gestattet es unter diesen Umständen, Bearbeitungsprodukte in unmittelbarer Nähe der zu ihrer Herstellung eingesetzten Bearbeitungseinrichtung aufzunehmen. Dementsprechend sind abzuführende Bearbeitungsprodukte nach Beendigung der sie erzeugenden Werkstückbearbeitung allenfalls über eine ausgesprochen kurze Wegstrecke zu bewegen, ehe sie für die an ihnen festzulegende Halteeinrichtung zugänglich sind.

Die erfindungsgemäße Verteilung der Halteeinrichtung für Bearbeitungsprodukte auf mehrere Haite-Teileinrichtungen gestattet es insbesondere, mehrere Bearbeitungsprodukte gleichzeitig aufzunehmen und von der Bearbeitungseinrichtung abzuführen. Beispielsweise können Halte-Teileinrichtungen gleichzeitig an mehreren Seiten der Bearbeitungseinrichtung abzuführende Bearbeitungsprodukte aufnehmen. Da die Halte-Teileinrichtungen der Halteeinrichtung für Bearbeitungsprodukte unabhängig voneinander an der sekundären Tragstruktur positionierbar sind, ist eine besonders flexible Anpassung der Halteeinrichtung an wechselnde Positionen der abzuführenden Bearbeitungsprodukte im Nahbereich der Bearbeitungseinrichtung möglich.

Die für die Abfuhr von Bearbeitungsprodukten benötigte Zeit reduziert sich auf ein Minimum. Daraus wiederum resultiert eine Minimierung der Totzeiten der Bearbeitungseinrichtung. Denn je eher Bearbeitungsprodukte von der Bearbeitungseinrichtung abgeführt sind, desto eher kann die Bearbeitungseinrichtung die für die Dauer der Abfuhr der Bearbeitungsprodukte unterbrochene Werkstückbearbeitung wieder aufnehmen. Es ergibt sich eine zeitliche Optimierung des mittels der erfindungsgemäßen Anordnung realisierten Fertigungsprozesses insgesamt. Gleichzeitig schafft die Zustellbarkeit der Halteeinrichtung gegenüber der Basis-Tragstruktur erfindungsgemäßer Handlingvorrichtungen die Voraussetzung dafür, dass mit einer einzigen Halteeinrichtung bei ein und derselben Position der Basis-Tragstruktur unterschiedlichste Werkstücke von der Bearbeitungseinrichtung abgeführt werden können. In bevorzugter Ausgestaltung der Erfindung ist die an der sekundären Tragstruktur vorgesehene Halteeinrichtung gegenüber einer weiteren, an der Basis-Tragstruktur montierten Einrichtung zur Fixierung von Bearbeitungsprodukten zustellbar. In jedem Fall kann die an der sekundären Tragstruktur angebrachte Halteeinrichtung derart angeordnet werden, dass sie sich in unmittelbarer Nähe der Bearbeitungseinrichtung funktionsgerecht an den abzuführenden Bearbeitungsprodukten festlegen lässt.

Besondere Ausführungsarten der maschinellen Anordnung gemäß Patentanspruch 1 ergeben sich aus den abhängigen Patentansprüchen 2 bis 8.

Ausweislich Patentanspruch 2 ist die an der sekundären Tragstruktur vorgesehene Halteeinrichtung für Bearbeitungsprodukte in bevorzugter Ausgestaltung der Erfindung gegenüber der Bearbeitungseinrichtung in zwei Achsrichtungen einer Zustellebene zustellbar. Diese Zustellebene verläuft parallel zu einer Fixierungsebene, die an der Halteeinrichtung definiert ist und die sich parallel zu derjenigen Oberfläche der Bearbeitungsprodukte erstreckt, an welcher die Halteeinrichtung festzulegen ist. Aufgrund der zweiachsigen Zustellbarkeit der Halteeinrichtung lässt sich deren Position optimal an die Erfordernisse des jeweiligen Einsatzfalles anpassen.

Patentanspruch 3 beschreibt eine erfindungsgemäß vorgesehene Möglichkeit zur anwendungsbezogenen Konfigurierung der sekundären Tragstruktur mit der daran vorgesehenen Halteeinrichtung. Letztlich ist mit der Positionierung der Halteeinrichtung an der sekundären Tragstruktur auch eine Positionierung der Halteeinrichtung gegenüber der Bearbeitungseinrichtung verbunden.

Im Falle der Erfindungsbauart nach Patentanspruch 4 kragt die Halteeinrichtung für Bearbeitungsprodukte an der sekundären Tragstruktur vor. Infolge dieses Erfindungsmerkmals besitzt die Handlingvorrichtung der erfindungsgemäßen Anordnung im unmittelbaren Nahbereich der Bearbeitungseinrichtung ein besonders kleines Bauvolumen. Daher kann die Handlingvorrichtung mit der Halteeinrichtung auch in räumlich extrem beengte Bereiche nahe der Bearbeitungseinrichtung bewegt werden, um dort abzuführende Bearbeitungsprodukte aufzunehmen.

Gemäß Patentanspruch 5 weist die Halteeinrichtung für Bearbeitungsprodukte in weiterer bevorzugter Ausgestaltung der Erfindung eine Mehrzahl von Halteelementen, vorzugsweise von Vakuumsaugern, auf. Diese Halteelemente beziehungsweise Vakuumsauger ermöglichen eine funktionssichere Festlegung des oder der abzuführenden Bearbeitungsprodukte an der Handlingvorrichtung.

Patentanspruch 6 betrifft eine Erfindungsbauart, im Falle derer Halteelemente der Halteeinrichtung für Bearbeitungsprodukte unabhängig voneinander aktivierbar sind. Aufgrund dieser Maßnahme lässt sich der wirksame Bereich der Halteeinrichtung an wechselnde Geometrien beziehungsweise an wechselnde Größen der von der Bearbeitungseinrichtung abzuführenden Bearbeitungsprodukte anpassen. Mit ein und derselben Handlingvorrichtung können unterschiedlichste Handlingaufgaben bewältigt werden. Aktiviert werden jeweils nur diejenigen Halteelemente der Halteeinrichtung, die zur Fixierung des oder der betreffenden Bearbeitungsprodukte benötigt werden beziehungsweise verwendbar sind. Von besonderer Bedeutung ist die getrennte Aktivierbarkeit für Halteelemente in Form von Vakuumsaugern. Es werden in diesem Fall nur diejenigen Vakuumsauger aktiviert, das heißt an einen Unterdruck angelegt, welche einem geschlossenen Bereich des abzuführenden Bearbeitungsprodukts zugeordnet sind. Infolgedessen kann die zur sicheren Festlegung des oder der abzuführenden Bearbeitungsprodukte benötigte Haltekraft zuverlässig erzeugt werden. Eine Beeinträchtigung der Funktionsfähigkeit der Vakuumsauger, wie sie beispielsweise mit dem Anlegen von Vakuumsaugern im Bereich von Aussparungen an den Bearbeitungsprodukten verbunden wäre, wird vermieden.

Zweckmäßigerweise ist in weiterer bevorzugter Ausgestaltung der Erfindung vorgesehen, dass die Halteelemente der Halteeinrichtung für Bearbeitungsprodukte zu Halteelementfeldern zusammengefasst sind, die unabhängig voneinander aktiviert werden können. Diese Maßnahme vereinfacht die Ansteuerung der Halteelemente insofern, als sich eine Einzelansteuerung beziehungsweise Einzelaktivierung von Halteelementen erübrigt.

Die Erfindungsbauart nach Patentanspruch 8 zeichnet sich dadurch aus, dass auch die Basis-Tragstruktur zur Festlegung von zu bearbeitenden Werkstücken und/oder von abzuführenden Bearbeitungsprodukten dienen kann. Zum Abführen von Bearbeitungsprodukten wird die Basis-Tragstruktur insbesondere dann eingesetzt, wenn die Bearbeitungsprodukte entsprechend großflächig sind. Im Übrigen wird die Halteeinrichtung der Basis-Tragstruktur vorrangig für den Transport von zu bearbeitenden Werkstücken zu der Bearbeitungseinrichtung genutzt.

Nachstehend wird die Erfindung anhand beispielhafter schematischer Darstellungen näher erläutert. Es zeigen:
- Figur 1: eine maschinelle Anordnung zum Bearbeiten von Blechen mit einem Stanzkopf sowie mit einer Handlingvorrichtung mit Basis-Tragstruktur und sekundärer Tragstruktur,
- Figur 2: das Detail D von Figur 1 mit einem Teil der Basis-Tragstruktur sowie mit der sekundären Tragstruktur bei einer ersten Position der sekundären Tragstruktur gegenüber der Basis-Tragstruktur,
- Figur 3: die Anordnung gemäß Figur 2 mit einem daran festgelegten Blech,
- Figur 4: die Anordnung gemäß den Figuren 2 und 3 bei einer zweiten Position der sekundären Tragstruktur gegenüber der Basis-Tragstruktur,
- Figur 5: die Anordnung gemäß Figur 4 an dem Stanzkopf gemäß Figur 1 mit Entnahmeleisten beidseits des Stanzkopfes,
- Figur 6: die Anordnung gemäß Figur 5 von unten,
- Figur 7: die Anordnung gemäß Figur 4 an dem Stanzkopf gemäß Figur 1 und mit Entnahmeleisten an einer Seite des Stanzkopfes,
- Figur 8: die Anordnung gemäß Figur 7 zusätzlich mit einem stark schematisiert angedeuteten Laserschneidkopf,
- Figur 9: die Anordnung gemäß Figur 8 von unten und
- Figuren 10, 11, 12: drei Bauarten von Entnahmeleisten.

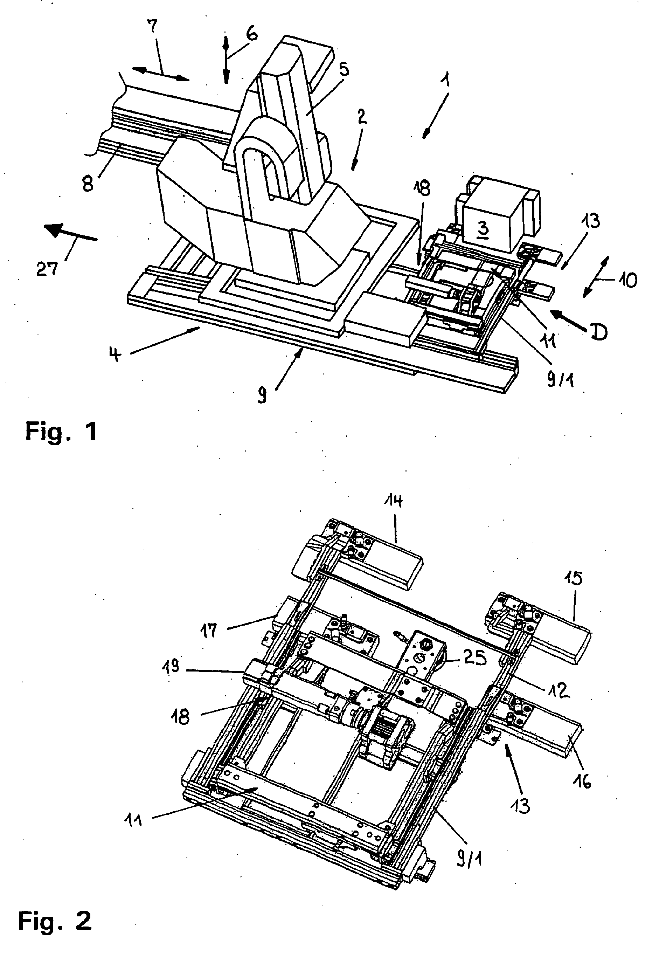

Gemäß Figur 1 umfasst eine maschinelle Anordnung 1 zum Bearbeiten von Blechen eine Handlingvorrichtung 2 sowie eine Bearbeitungseinrichtung in Form eines Stanzkopfes 3. Teil der Handlingvorrichtung 2 ist ein Saugerrahmen 4, der eine Tragstruktur bildet und der mittels einer Bewegungseinheit 5 in vertikaler Richtung (Doppelpfeil 6) angehoben und abgesenkt sowie in horizontaler Richtung (Doppelpfeil 7) entlang einer Führungsbahn 8 verfahren werden kann.

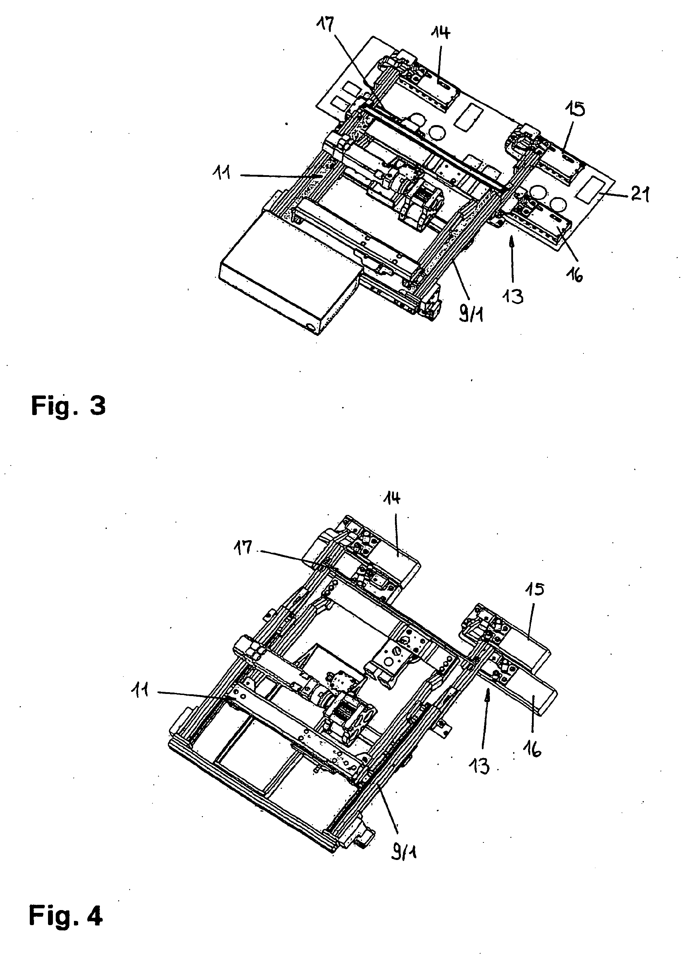

Der Saugerrahmen 4 wird gebildet von einer Basis-Tragstruktur 9 sowie von einer an einer Führungseinrichtung 9/1 der Basis-Tragstruktur 9 in einer Zustellrichtung 10 beweglich geführten sekundären Tragstruktur 11. Die Basis-Tragstruktur 9 ist in Richtung des Doppelpfeils 10 relativ zu der Bewegungseinheit 5 der Handlingvorrichtung 2 bewegbar. Beispielhafte Möglichkeiten für Zustellpositionen der sekundären Tragstruktur 11 gegenüber der Basis-Tragstruktur 9 sind in den Figuren 2 und 3 einerseits und in Figur 4 andererseits dargestellt.

Die Führungseinrichtung 9/1 bildet einen vorkragenden Tragrahmen 12 aus. An dem Tragrahmen 12 der Führungseinrichtung 9/1 sind Entnahmeleisten 14, 15 montiert.

Eine Halteeinrichtung 13 ist an der sekundären Tragstruktur 11 vorgesehen und umfasst in dem dargestellten Beispielsfall zwei vorkragende Halte-Teileinrichtungen in Form von Entnahmeleisten 16, 17. Diese sind mit der sekundären Tragstruktur 11 verschraubt und können an der sekundären Tragstruktur 11 in Zustellrichtung 10 sowie quer dazu in unterschiedlichen Positionen fixiert werden. Entsprechend lassen sich die Entnahmeleisten 14, 15 an dem Tragrahmen 12 der Basis-Tragstruktur 9 umsetzen.

Die Achsen der möglichen Positionierung der Entnahmeleisten 14, 15, 16, 17 spannen eine Ebene auf, die parallel zu der Oberfläche der mittels der Entnahmeleisten 14, 15, 16, 17 aufzunehmenden Bearbeitungsprodukte verläuft.

Ein numerisch gesteuerter Verfahrantrieb 18 bewirkt die Zustellbewegung der sekundären Tragstruktur 11 mit der Halteeinrichtung 13 relativ zu der Führungseinrichtung 9/1 der Basis-Tragstruktur 9 in Zustellrichtung 10. Ein elektrischer Antriebsmotor 19 des Verfahrantriebes 18 ist an der Basis-Tragstruktur 9 angebracht und bleibt bei Verfahrbewegungen der sekundären Tragstruktur 11 stationär.

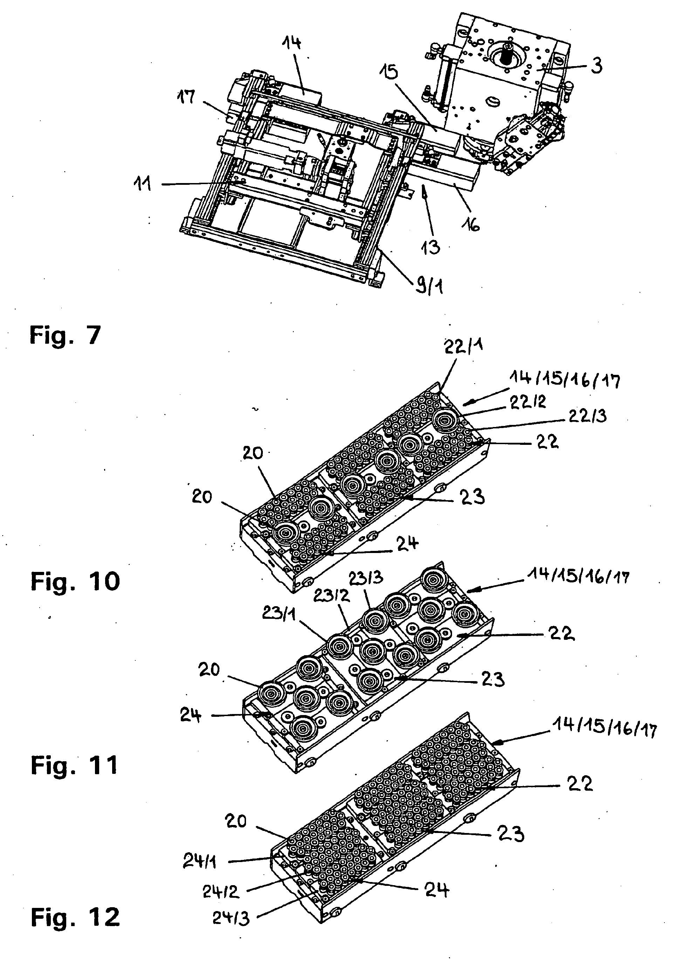

Die Entnahmeleisten 16, 17 der Halteeinrichtung 13 sind ebenso wie die Entnahmeleisten 14, 15 der Basis-Tragstruktur 9 an ihrer Unterseite mit Halteelementen in Form von Vakuumsaugern 20 versehen (Figuren 10, 11, 12). Die Vakuumsauger 20 gestatten es, Bleche 21 - wie in Figur 3 dargestellt - anzusaugen und zu halten. In den Figuren 2 und 4 sind an der Oberseite der Entnahmeleisten 14, 15, 16, 17 Anschlüsse zu erkennen, über welche die Vakuumsauger 20 der Entnahmeleisten 14, 15, 16, 17 mit einer Unterdruckquelle verbunden werden können.

In den Figuren 1 bis 9 sind die Entnahmeleisten 14, 15, 16, 17 der Einfachheit halber ohne die Vakuumsauger 20 gezeigt. Im Detail, d.h. mit den Vakuumsaugern 20, sind die Entnahmeleisten 14, 15, 16, 17 in den Figuren 10, 11, 12 dargestellt. Die unterschiedlichen Bauarten der Entnahmeleisten 14, 15, 16, 17 können an der sekundären Tragstruktur 11 bzw. an der Basis-Tragstruktur 9 einzeln oder kombiniert vorgesehen werden.

Gemäß den Figuren 10, 11, 12 sind an den Entnahmeleisten 14, 15, 16, 17 Vakuumsauger 20 unterschiedlicher Geometrie und Größe denkbar. Sämtliche Vakuumsauger 20 dienen als Entnahmesauger.

Alle dargestellten Bauarten der Entnahmeleisten 14, 15, 16, 17 weisen drei Sauger-Hauptfelder 22, 23, 24 auf. Jedes der Sauger-Hauptfelder 22, 23, 24 umfasst drei Halteelementfelder in Form von Saugerfeldern 22/1, 22/2, 22/3; 23/1, 23/2, 23/3; 24/1, 24/2, 24/3. Die Vakuumsauger 20 eines jeden Saugerfeldes 22/1, 22/2, 22/3; 23/1, 23/2, 23/3; 24/1, 24/2, 24/3 sind gemeinschaftlich an die zugehörige Unterdruckquelle anlegbar oder von der Unterdruckquelle trennbar. Die einzelnen Saugerfelder 22/1, 22/2, 22/3; 23/1, 23/2, 23/3; 24/1, 24/2, 24/3 lassen sich dabei unabhängig voneinander aktivieren oder deaktivieren. Die betreffende Steuerung übernimmt die numerische Steuerung der maschinellen Anordnung 1.

Weitere Sauger, in diesem Fall Tragsauger, sind an der Unterseite der Basis-Tragstruktur 9 vorgesehen. Von diesen Tragsaugern ist in den Abbildungen der Einfachheit halber lediglich ein einzelner Tragsauger 25 gezeigt. Die Tragsauger 25 bilden gemeinsam mit den Entnahmeleisten 14, 15 eine Halteeinrichtung der Basis-Tragstruktur 9, wobei, die Tragsauger 25 vorrangig zum Fixieren von zu bearbeitenden Werkstücken genutzt werden.

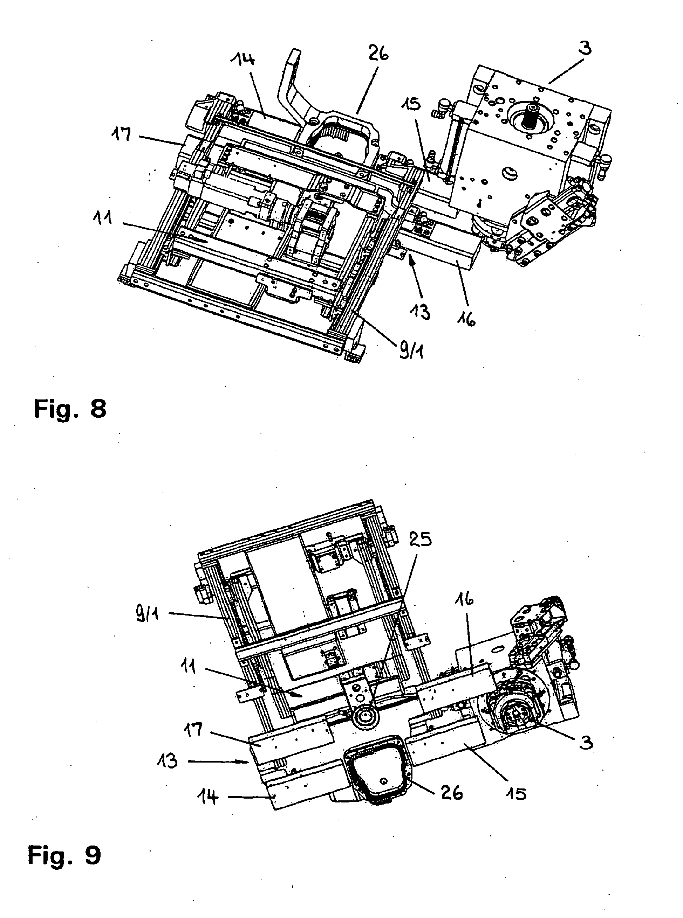

Zusätzlich zu dem Stanzkopf 3 kann die maschinelle Anordnung 1 als Bearbeitungseinrichtung zur Blechbearbeitung einen Laserschneidkopf 26 aufweisen, wie er in den Figuren 8 und 9 stark schematisiert angedeutet ist. In diesem Fall ist eine kombinierte Laser-/ Stanzbearbeitung von Blechen möglich.

Im betrieblichen Einsatz wird die Handlingvorrichtung 2 zunächst abgestimmt auf die jeweils zu lösende Handlingaufgabe konfiguriert. Zu diesem Zweck werden die Entnahmeleisten 16, 17 an der sekundären Tragstruktur 11 und die Entnahmeleisten 14, 15 an dem Tragrahmen 12 der Basis-Tragstruktur 9 zweckentsprechend positioniert.

Zu bearbeitende Bleche werden mit Hilfe der Handlingvorrichtung 2 in einem in den Abbildungen nicht gezeigten Lager einzeln aufgenommen. An dem Saugerrahmen 4 wird das betreffende Blech dabei sowohl mittels der Vakuumsauger 20 der Entnahmeleisten 14, 15, 16, 17 als auch mittels der Tragsauger 25 der Basis-Tragstruktur 9 festgelegt. Die sekundäre Tragstruktur 11 mit den Entnahmeleisten 16 ,17 kann zu diesem Zeitpunkt diejenige Position gegenüber der Basis-Tragstruktur 9 bzw. deren Führungseinrichtung 9/1 einnehmen, mit welcher sie in Figur 2 gezeigt ist.

Nach der Übernahme des zu bearbeitenden Bleches verfährt der Saugerrahmen 4 entlang der Führungsbahn 8 zu der für die Blechbearbeitung vorgesehenen Bearbeitungseinrichtung. Nahe der Bearbeitungseinrichtung wird das zu bearbeitende Blech abgelegt und anschließend von einer nicht gezeigten Koordinatenführung der maschinellen Anordnung 1 übernommen und zu dem Stanzkopf 3 bzw. zu dem Laserschneidkopf 26 bewegt. An dem Stanzkopf 3 bzw. an dem Laserschneidkopf 26 erfolgt dann die Blechbearbeitung. Bei der Blechbearbeitung hergestellte Bearbeitungsprodukte, beispielsweise Blechzuschnitte, werden mit Hilfe der Entnahmeleisten 16, 17 der Halteeinrichtung 13 sowie mit Hilfe der Entnahmeleisten 14, 15 an der Basis-Tragstruktur 9 aus dem unmittelbaren Nahbereich des Stanzkopfes 3 bzw. des Laserschneidkopfes 26 abgeführt.

Zu diesem Zweck wird der Saugerrahmen 4 der Handlingvorrichtung 2 mit der nach wie vor in der Position gemäß Figur 2 an der Basis-Tragstruktur 9 angeordneten sekundären Tragstruktur 11 entlang der Führungsbahn 8 in eine Position bewegt in welcher die Entnahmeleisten 14, 15, 16, 17 dem oder den aufzunehmenden Bearbeitungsprodukten in Richtung des Doppelpfeils 10 gegenüberliegen.

Ausgehend von dieser Position kann die Basis-Tragstruktur 9 gemeinschaftlich mit der gemäß Figur 2 zugestellten sekundären Tragstruktur 11 zu dem Stanzkopf 3 bzw. dem Laserschneidkopf 26 hin bewegt werden, um dort das oder die abzuführenden Bearbeitungsprodukte aufzunehmen. Dabei ist es denkbar, dass das oder die abzuführende Bearbeitungsprodukte in derjenigen Position aufgenommen werden, in welcher sie unmittelbar nach Abschluss der betreffenden Blechbearbeitung angeordnet sind. Alternativ können Bearbeitungsprodukte mittels der Koordinatenführung der maschinellen Anordnung 1 nach Abschluss der Blechbearbeitung geringfügig gegenüber dem Stanzkopf 3 bzw. dem Laserschneidkopf 26 zu bewegen sein, ehe sie für die Entnahme zugänglich sind. In jedem Fall werden die Halteeinrichtung 13 an der sekundären Tragstruktur 11 sowie die Entnahmeleisten 14, 15 an der Basis-Tragstruktur 9 in Positionen bewegt, in denen sich die an dem oder den abzuführenden Bearbeitungsprodukten anzulegenden Vakuumsauger 20 über dem oder den betreffenden Bearbeitungsprodukten befinden.

Je nach Geometrie bzw. Anordnung der Bearbeitungsprodukte besteht abweichend von den vorstehend beschriebenen Abläufen die Möglichkeit, die sekundäre Tragstruktur 11 gegenüber der Basis-Tragstruktur 9 in Richtung des Doppelpfeils 10 in eine von der Position gemäß Figur 2 verschiedene Position zuzustellen. Denkbar ist beispielsweise eine Relativlage von sekundärer Tragstruktur 11 und Basis-Tragstruktur 9, wie sie in Figur 4 gezeigt ist. Diese Zustellbewegung der sekundären Tragstruktur 11 kann ausgeführt werden, ehe die Basis-Tragstruktur 9 mit den Entnahmeleisten 14, 15 und dabei gemeinschaftlich mit der sekundären Tragstruktur 11 und deren Halteeinrichtung 13 über das oder die abzuführenden Bearbeitungsprodukte bewegt wird. Alternativ besteht die Möglichkeit, die Zustellbewegung der sekundären Tragstruktur 11 gegenüber der Basis-Tragstruktur 9 mit der Bewegung der Basis-Tragstruktur 9 zu parallelisieren oder der Bewegung der Basis-Tragstruktur 9 nachfolgen zu lassen. In jedem Fall lässt sich die Zustellbewegung der sekundären Tragstruktur 11 numerisch steuern.

Mit der Basis-Tragstruktur 9 und der sekundären Tragstruktur 11 wird der gesamte Saugerrahmen 4 so weit abgesenkt, bis Vakuumsauger 20 der Entnahmeleisten 16, 17 sowie Vakuumsauger 20 der Entnahmeleisten 14, 15 an dem oder den abzuführenden Bearbeitungsprodukten zur Anlage kommen. Dann werden die Vakuumsauger 20 des oder der einzusetzenden Saugerfelder 22, 23, 24 an die Unterdruckquelle angelegt und das oder die Bearbeitungsprodukte werden von der Halteeinrichtung 13 angesaugt. Mit dem oder den an den Entnahmeleisten 14, 15, 16, 17 gehaltenen Bearbeitungsprodukten verfährt der Saugerrahmen 4 von dem Stanzkopf 3 und/oder dem Laserschneidkopf 26 zurück, ehe er schließlich mit seiner Ladung in einer Abförderrichtung 27 entlang der Führungsbahn 8 bewegt wird.

Aufgrund der Verstellbarkeit der sekundären Tragstruktur 11 gegenüber der Basis-Tragstruktur 9 lässt sich die Handlingvorrichtung 2 flexibel auf unterschiedliche Anwendungserfordernisse abstimmen. Eine zusätzliche Möglichkeit zur anwendungsbezogenen Konfigurierung der Handlingvorrichtung 2 bietet die Umsetzbarkeit der Entnahmeleisten 14, 15 an der Basis-Tragstruktur 9 sowie die Umsetzbarkeit der Entnahmeleisten 16, 17 an der sekundären Tragstruktur 11.

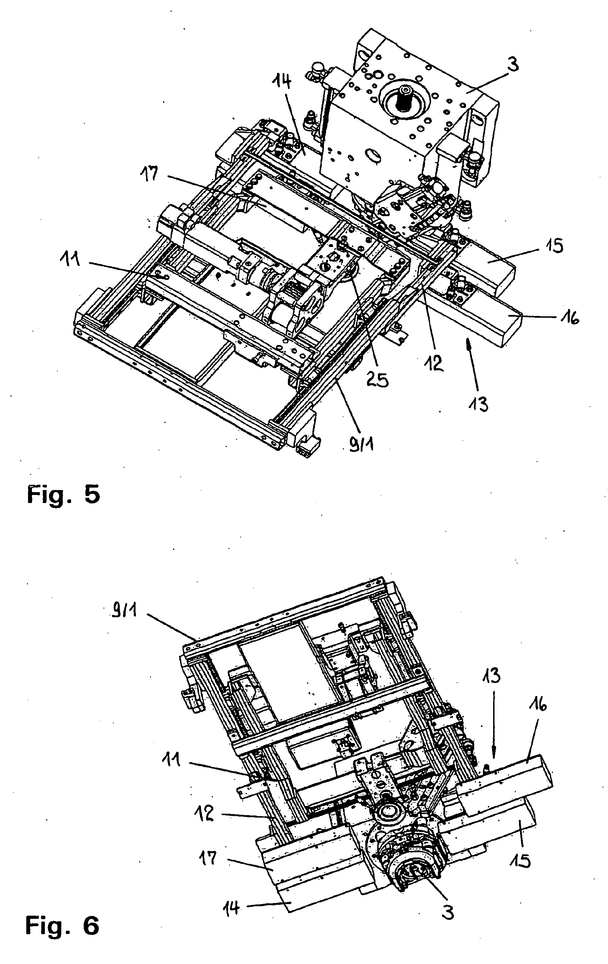

Gemäß den Figuren 5 und 6 etwa können Bearbeitungsprodukte an beiden Seiten des Stanzkopfes 3 gleichzeitig aufgenommen werden. Gemäß Figur 7 dienen die Halteeinrichtung 13 sowie die Entnahmeleiste 15 zum Abführen eines oder mehrerer Bearbeitungsprodukte an einer Seite des Stanzkopfes 3. Im Falle der in den Figuren 8 und 9 dargestellten Anwendung werden Bearbeitungsprodukte zwischen dem Laserschneidkopf 26 und dem Stanzkopf 3 und außerdem an der von dem Stanzkopf 3 abliegenden Seite des Laserschneidkopfes 26 aufgenommen.

## Patentansprüche

1. Maschinelle Anordnung zum Bearbeiten von plattenartigen Werkstücken, insbesondere von Blechen (21), mit einer Bearbeitungseinrichtung (3, 26) sowie mit einer Handlingvorrichtung (2), mittels derer Bearbeitungsprodukte, welche an der Bearbeitungseinrichtung (3, 26) unter Bearbeitung von Werkstücken hergestellt worden sind, von der Bearbeitungseinrichtung (3, 26) abführbar sind und welche eine Tragstruktur (4) mit einer Halteeinrichtung (13) für Bearbeitungsprodukte aufweist,
• wobei die Tragstruktur (4) der Handlingvorrichtung (2) eine Basis-Tragstruktur (9) sowie eine sekundäre Tragstruktur (11) aufweist, welche an der Basis-Tragstruktur (9) relativ zu dieser beweglich gelagert ist,
• wobei die Halteeinrichtung (13) für Bearbeitungsprodukte an der sekundären Tragstruktur (11) vorgesehen und an wenigstens einem von der Bearbeitungseinrichtung (3, 26) abzuführenden Bearbeitungsprodukt festlegbar ist, indem die Halteeinrichtung (13) unter Bewegung der sekundären Tragstruktur (11) relativ zu der Basis-Tragstruktur (9) gegenüber der Bearbeitungseinrichtung (3, 26) zustellbar ist und
• wobei die Halteeinrichtung (13) mit dem oder den daran festgelegten Bearbeitungsprodukten in einer Abförderrichtung (27) bewegbar ist,
**dadurch gekennzeichnet, dass**
die Halteeinrichtung (13) für Bearbeitungsprodukte mehrere an der sekundären Tragstruktur (11) vorgesehene Halte-Teileinrichtungen (16, 17) umfasst, die unabhängig voneinander an der sekundären Tragstruktur (11) wahlweise mit unterschiedlichen Positionen parallel zu einer an den Halte-Teileinrichtungen (16, 17) definierten Fixierungsebene für Bearbeitungsprodukte anordenbar sind.

2. Maschinelle Anordnung nach Anspruch 1, **dadurch gekennzeichnet, dass** die Halteeinrichtung (13) für Bearbeitungsprodukte gegenüber der Bearbeitungseinrichtung (3, 26) in zwei Achsrichtungen einer Zustellebene zustellbar ist, die sich parallel zu einer an der Halteeinrichtung (13) definierten Fixierungsebene für Bearbeitungsprodukte erstreckt.

3. Maschinelle Anordnung nach einem der vorhergehenden Ansprüche, **dadurch gekennzeichnet, dass** die Halteeinrichtung (13) für Bearbeitungsprodukte an der sekundären Tragstruktur (11) wahlweise mit unterschiedlichen Positionen parallel zu einer an der Halteeinrichtung (13) definierten Fixierungsebene für Bearbeitungsprodukte anordenbar ist.

4. Maschinelle Anordnung nach einem der vorhergehenden Ansprüche, **dadurch gekennzeichnet, dass** die Halteeinrichtung (13) für Bearbeitungsprodukte an der sekundären Tragstruktur (11) mit einer gegenüber dieser vorkragenden Anordnung positionierbar ist.

5. Maschinelle Anordnung nach einem der vorhergehenden Ansprüche, **dadurch gekennzeichnet, dass** die Halteeinrichtung (13) für Bearbeitungsprodukte eine Mehrzahl von Halteelementen (20), vorzugsweise von Vakuumsaugern, aufweist, die an wenigstens einem von der Bearbeitungseinrichtung (3, 26) abzuführenden Bearbeitungsprodukt zu dessen Festlegung anlegbar sind.

6. Maschinelle Anordnung nach einem der vorhergehenden Ansprüche, **dadurch gekennzeichnet, dass** Halteelemente (20) der Halteeinrichtung (13) für Bearbeitungsprodukte unabhängig voneinander zur Festlegung des oder der von der Bearbeitungseinrichtung (3, 26) abzuführenden Bearbeitungsprodukte aktivierbar sind.

7. Maschinelle Anordnung nach einem der vorhergehenden Ansprüche, **dadurch gekennzeichnet, dass** Halteelemente (20) der Halteeinrichtung (13) für Bearbeitungsprodukte zu Halteelementfeldern (22/1, 22/2, 22/3; 23/1, 23/2, 23/3; 24/1, 24/2, 24/3) zusammengefasst sind und dass Halteelementfelder (22/1, 22/2, 22/3; 23/1, 23/2, 23/3; 24/1, 24/2, 24/3) mit den jeweiligen Halteelementen (20) unabhängig voneinander zur Festlegung des oder der von der Bearbeitungseinrichtung (3, 26) abzuführenden Bearbeitungsprodukte aktivierbar sind.

8. Maschinelle Anordnung nach einem der vorhergehenden Ansprüche, **dadurch gekennzeichnet, dass** die Basis-Tragstruktur (9) mit einer Halteeinrichtung (14, 15, 25) für zu bearbeitende Werkstücke und/oder für von der Bearbeitungseinrichtung abzuführende Bearbeitungsprodukte versehen ist.

## Claims

1. A mechanical arrangement for processing plate-like workpieces, especially metal sheets (21), having a processing device (3, 26) and having a handling apparatus (2) by means of which products of processing that have been produced at the processing device (3, 26) by processing of workpieces may be taken away from the processing device (3, 26) and which has a support structure (4) with a holding device (13) for products of processing,
• wherein the support structure (4) of the handling apparatus (2) has a base support structure (9) and a secondary support structure (11) which is supported on the base support structure (9) so as to be movable relative thereto and
• wherein the holding device (13) for products of processing is provided on the secondary support structure (11) and may be attached to at least one product of processing to be taken away from the processing device (3, 26) by virtue of the fact that the holding device (13) may be positioned with respect to the processing device (3, 26) with movement of the secondary support structure (11) relative to the base support structure (9), and
• wherein the holding device (13) is movable in a removal direction (27) with the product(s) of processing attached thereto,
**characterised in that**
the holding device (13) for products of processing comprises a plurality of holding device subunits (16, 17) provided on the secondary support structure (11), which holding device subunits (16, 17) may, independently of one another, be selectively arranged on the secondary support structure (11) with different positions parallel to a fixing plane for products of processing defined at the holding device subunits (16, 17).

2. A mechanical arrangement according to claim 1, **characterised in that** the holding device (13) for products of processing may be positioned with respect to the processing device (3, 26) in two axis directions of a positioning plane which extends parallel to a fixing plane for products of processing defined at the holding device (13).

3. A mechanical arrangement according to either of the preceding claims, **characterised in that** the holding device (13) for products of processing may be selectively arranged on the secondary support structure (11) with different positions parallel to a fixing plane for products of processing defined at the holding device (13).

4. A mechanical arrangement according to any one of the preceding claims, **characterised in that** the holding device (13) for products of processing is positionable on the secondary support structure (11) in a projecting configuration with respect thereto.

5. A mechanical arrangement according to any one of the preceding claims, **characterised in that** the holding device (13) for products of processing has a plurality of holding elements (20), preferably vacuum pads, which may be applied to at least one product of processing to be taken away from the processing device (3, 26), for the purpose of attachment thereof.

6. A mechanical arrangement according to any one of the preceding claims, **characterised in that** holding elements (20) of the holding device (13) for products of processing may be activated independently of one another for attachment of the product(s) of processing to be taken away from the processing device (3, 26).

7. A mechanical arrangement according to any one of the preceding claims, **characterised in that** holding elements (20) of the holding device (13) for products of processing are combined into holding element panels (22/1, 22/2, 22/3; 23/1, 23/2, 23/3; 24/1, 24/2, 24/3), and holding element panels (22/1, 22/2, 22/3; 23/1, 23/2, 23/3; 24/1, 24/2, 24/3) with the respective holding elements (20) may be activated independently of one another for attachment of the product(s) of processing to be taken away from the processing device (3, 26).

8. A mechanical arrangement according to any one of the preceding claims, **characterised in that** the base support structure (9) is provided with a holding device (14, 15, 25) for workpieces which are to be processed and/or for products of processing which are to be taken away from the processing device.

## Revendications

1. Agencement mécanique pour l'usinage de pièces du genre plaques, en particulier de tôles (21), avec un dispositif d'usinage (3, 26), et avec un dispositif de manipulation (2) au moyen duquel des produits de l'usinage, qui ont été fabriqués sur le dispositif d'usinage (3, 26) en usinant les pièces, peuvent être évacués du dispositif d'usinage (3, 26), et qui présente une structure porteuse (4) avec un équipement de maintien (13) pour des produits de l'usinage,
- sachant que la structure porteuse (4) du dispositif de manipulation (2) présente une structure porteuse de base (9), et une structure porteuse secondaire (11) qui est montée sur la structure porteuse de base (9) à déplacement par rapport à celle-ci,
- sachant que l'équipement de maintien (13) pour produits de l'usinage est prévu sur la structure porteuse secondaire (11) et peut être fixé en position sur au moins un produit de l'usinage à évacuer du dispositif d'usinage (3, 26), par le fait que l'équipement de maintien (13) peut être positionné par rapport au dispositif d'usinage (3, 26) en déplaçant la structure porteuse secondaire (11) par rapport à la structure porteuse de base (9),
- et sachant que l'équipement de maintien (13) avec le ou les produits de l'usinage fixés en position sur lui peut être déplacé dans une direction d'évacuation (27),
**caractérisé en ce que** l'équipement de maintien (13) pour produits de l'usinage comprend plusieurs équipements partiels de maintien (16, 17) prévus sur la structure porteuse secondaire (11), qui peuvent être disposés indépendamment les uns des autres sur la structure porteuse secondaire (11), sélectivement dans différentes positions parallèlement à un plan de fixation en position pour produits de l'usinage qui est défini sur les équipements partiels de maintien (16, 17).

2. Agencement mécanique selon la revendication 1, **caractérisé en ce que** l'équipement de maintien (13) pour produits de l'usinage peut être positionné par rapport au dispositif d'usinage (3, 26) dans deux directions axiales d'un plan de positionnement qui s'étend parallèlement à un plan de fixation en position pour produits de l'usinage qui est défini sur l'équipement de maintien (13).

3. Agencement mécanique selon l'une des revendications précédentes, **caractérisé en ce que** l'équipement de maintien (13) pour produits de l'usinage peut être disposé sur la structure porteuse secondaire (11) sélectivement dans différentes positions parallèlement à un plan de fixation en position pour produits de l'usinage qui est défini sur l'équipement de maintien (13).

4. Agencement mécanique selon l'une des revendications précédentes, **caractérisé en ce que** l'équipement de maintien (13) pour produits de l'usinage peut être positionné sur la structure porteuse secondaire (11) avec une disposition en saillie par rapport à celle-ci.

5. Agencement mécanique selon l'une des revendications précédentes, **caractérisé en ce que** l'équipement de maintien (13) pour produits de l'usinage présente une pluralité d'éléments de maintien (20), de préférence de ventouse à vide, qui peuvent être appliqués sur au moins un produit de l'usinage à évacuer du dispositif d'usinage (3, 26) afin de le fixer en position.

6. Agencement mécanique selon l'une des revendications précédentes, **caractérisé en ce que** les éléments de maintien (20) de l'équipement de maintien (13) pour produits de l'usinage peuvent être activés indépendamment les uns des autres afin de fixer en position le ou les produits de l'usinage à évacuer du dispositif d'usinage (3, 26).

7. Agencement mécanique selon l'une des revendications précédentes, **caractérisé en ce que** les éléments de maintien (20) de l'équipement de maintien (13) pour produits de l'usinage sont regroupés en champs d'éléments de maintien (22/1, 22/2, 22/3 ; 23/1, 23/2, 23/3 ; 24/1, 24/2, 24/3), et **en ce que** des champs d'éléments de maintien (22/1, 22/2, 22/3 ; 23/1, 23/2, 23/3 ; 24/1, 24/2, 24/3) pourvus des éléments de maintien respectifs (20) peuvent être activés indépendamment les uns des autres afin de fixer en position le ou les produits de l'usinage à évacuer du dispositif d'usinage (3, 26).

8. Agencement mécanique selon l'une des revendications précédentes, **caractérisé en ce que** la structure porteuse de base (9) est pourvue d'un équipement de maintien (14, 15, 25) pour les pièces à usiner et/ou pour les produits de l'usinage à évacuer du dispositif d'usinage.
